# EUROPEAN PATENT APPLICATION

(11) **EP 4 557 795 A1**
(43) Date of publication of application: **21.05.2025**
(21) Application number: 23020510.6
(22) Date of filing: 17.11.2023
(51) Int. Cl.: H04W 12/30, H04W 12/40

(54) **PROVIDING AN EUICC WITH PROFILE DATA OF AT LEAST ONE PROFILE**

(71) Applicant: Giesecke+Devrient Mobile Security Germany GmbH, 81677 München (DE)
(72) Inventor: Huber, Ulrich, 81677 München (DE); Hartel, Karl Eglof, 81677 München (DE); Morawietz, Andreas, 81677 München (DE); Leibfahrth, Robert, 81677 München (DE); AbdAlla, Noha, 81677 München (DE)
(74) Representative: Giesecke+Devrient IP

(57) **Abstract**

A method for establishing, in a target eUICC, profile data of at least one profile, the profile data including at least a subscriber identity (IMSI; SUPI; NAI) and an authentication key K, the method characterized by the step: a) generate, in the target eUICC, at least some of the profile data, herein at least a network authentication key K.

## Description

### Field of the invention

The present invention relates to providing an eUICC with profile data of at least one profile, the eUICC being designed to be hosted in a wireless network communication device, or briefly mobile device.

### Background of the invention and prior art

The world is connected via wireless communication networks, also referred to as mobile communication networks, wherein devices hosting eUICCs communicate with each other and with wireless network background servers in a secured way. The eUICCs hosted in the devices comprise at least one or several subscription profiles, or briefly profiles, including profile data like an international mobile subscriber identity, which may be embodied as IMSI, or in 5G as SUPI or NAI, and an authentication key K, and a profile number ICCID, OTA keys, and further profile data, enabling communication in the wireless communication network.

For eUICCs, several form factors are known, including plug-in SIM-card or pSIM, embedded and soldered-in eUICC in a strict sense or eSIM, and integrated iUICC or iSIM integrated into a chip of a chipset of the device hosting the eUICC. In the context of the present invention, eUICC is understood to include any form factor, including any of the listed form factors.

Devices are for example known as consumer wireless network communication devices like smartphones and network-able tablet PCs, and as M2M wireless network communication devices including automotive wireless network communication devices and industrial wireless network communication devices. In the following, a device is meant to be a wireless network communication device, hosting an eUICC including one or several profiles, and constructed to communicate with other devices or network servers over a mobile communication network, herein including the eUICC for security relevant tasks like authentication.

The document [1] [SGP.22] GSMA SGP.22 RSP Technical Specification Version 3.0, 19th October 2022, describes procedures and architectures for provisioning profiles to eUlCCs hosted in consumer devices already in the field. The profile server from which profiles are downloaded to eUICCs in an SGP.22 scenario is also referred to as SM-DP+.

The documents [2] [SGP.41] GSMA SGP.41 eSIM IFPP Architecture and Requirements Version 1.0 Draft 17 and [3] [SGP.42] GSMA SGP.42 eSIM IFPP Technical Specification (unpublished at the date of filing the application) cover In-factory personalization or provisioning, which is a setup in which profiles are provisioned to an eUICC locally in a factory environment, contrary to the standard remote provisioning procedures envisaged in [1] [SGP.22], where a profile is downloaded to an eUICC from a remote profile provisioning server. The profile server from which profiles are downloaded to eUICCs in an in-factory procedure is also referred to as SM-DPf.

According to [1] [SGP.22], section 2.5 "Profile Protection and Delivery", an Operator's Profile is protected within a Profile Package prior to being downloaded to the eUICC. As further set out in sub-section 2.5.1, "Profile Package Types Overview", from generation to download, a Profile Package will take the following different formats:
- Unprotected Profile Package (UPP): Raw eUICC Profile Package TLV sequence.
- Protected Profile Package (PPP): Segmented and protected in BSP payload TLVs.
- Bound Profile Package (BPP): Prepended with session key agreement info, key replacement package, ISD-P creation and configuration info.
- Segmented Bound Profile Package (SBPP): BPP segmented into STORE DATA APDU script for loading into eUICC. This step is performed by the LPD when the LPD is in the Device.

Document [1] [SGP.22] allows the Protected Profile Package to be encrypted either with a key which is unspecific for any eUICC, or with a key which is specific to an eUICC. The process for transforming the Protected Profile Package PPP into a Bound Profile Package BBP is also referred to as binding. The purpose of the operation of transforming the Protected Profile Package PPP to the Bound Profile Package BPP is to link a Protected Profile Package to a particular eUICC.

According to [1] [SGP.22], section 2.5.4 "Bound Profile Package", the Bound Profile Package (BPP) is generated by the SM-DP+, within the Profile Package Binding function. This is done within a key agreement between the eUICC and the SM-DP+, which is described in the download and installation procedure (section 3.1.3). According to [1] [SGP.22], section 2.6.4.1 "Key agreement", an Elliptic Curve Key Agreement Algorithm (ECKA) is used for the establishment of a shared secret value. It shall follow the definition for the Anonymous Diffie-Hellman Key Agreement in BSI TR-03111. The algorithm is executed
- by the SM-DP+ using an eUICC one-time public key, otPK.EUICC.KA, and an SM-DP+ one-time private key (sometimes also named "secret" for "private"), otSK.DP.KA, and
- by the eUICC using an SM-DP+ one-time public key, otPK.DP.KA, and an eUICC one-time private key, otSK.EUICC.KA
to calculate the shared secret value.

From the shared secret value, the session keys S-ENC and S-MAC are derived, which in turn are used to encrypt and authenticate the Profile Protection Keys, PPK-ENC and PPK-MAC. With the Profile Protection Key PPK-ENC, the payload of the Protected Profile Package is encrypted (unless, according to a specific option, it is directly encrypted with S-ENC).

After an SM-DP+ has established a Bound Profile Package BBP and downloaded the BBP to an eUICC, the eUICC runs the above described key agreement to derive the shared secret value and finally the Profile Protection Key PPK-ENC (or in the specific option S-ENC), and decrypts the encrypted payload of the Protected Profile Package.

Obviously, only the eUICC that contributed the one-time public key otPK.EUICC.KA is able to decrypt the encrypted Protected Profile Package payload.

For the process of binding, to bind the Protected Profile Package PPP to an eUICC, and generate the Bound Profile Package BBP, the presence of the above two public keys and the two private keys is required.

The different formats of the profile package as outlined in [1] [SGP.22] are similarly pursued in in-factory profile provisioning according to [2] SGP.41 and [3] SGP.42, and also in in-factory profile provisioning the step of binding transforms a Protected Profile Package PPP into a Bound Profile Package BPP, with a similar Key Agreement procedure.

Therefore, to enable profile binding, i.e. generation of the Bound Profile Package BBP from the Protected Profile Package PPP, also in in-factory provisioning, the presence of an SM-DPf public key and corresponding SM-DPf private key and of an eUICC public key and corresponding eUICC private key is required.

In connection with In-factory provisioning according to [2] [SGP.41], the terms "early binding" and "late binding" have been introduced. Herein, "early binding" is understood as establishment of a binding between a profile and an eUICC without a profile download request being received. On the other hand, "late binding" is understood as establishment of a binding between a profile and an eUICC only in reaction to a profile download request being received at an entity having a profile, which entity may be either the SM-DPf or the IFFP production entity.

The currently envisaged binding procedure for in-factory provisioning according to [2] [SGP.41] foresees that a profile delivered by the profile server SM-DPf is already in the form of a Bound Profile Package BBP bound to a specific eUICC at the time of delivery, which in the above described definition can be referred to as "early binding" of the profile to the eUICC.

As a general rule, the in-factory provisioning environment is designed to be a closed environment having no connectivity to the outside world, including no connectivity to the profile server SM-DPf, so as to prevent security breaches.

For the "early binding", it is mandatory that the eUICC and SM-DPf specific one-time keys for the key agreement to generate the BBP are present. However, there are use case scenarios wherein the eUICC key is not available yet, or a binding of a profile to a specific eUICC at an early stage, before profile download is requested, is unwanted, and the binding of a profile to a specific eUICC shall be effected only at a late stage, when the eUICC is present in an in-factory environment which doesn't have connectivity to the profile server SM-DPf.

Document [4] EP2283666B1 discloses a method for taking a SIM (UICC) into first operation in a mobile network. The SIM stores a non-individual parameter data set which includes at least a non-individual subscriber identity IMSI and a non-individual network authentication key K, which may be the same for several SIMs. Upon first operation of the SIM in the mobile network, the SIM is personalized, wherein an individual parameter data set is established, wherein an individual subscriber identity IMSI and an individual network authentication key K are transferred to the SIM and stored in the SIM.

Document [5] EP3669562B1 describes a method for taking a SIM (UICC) into first operation in a mobile network. The SIM already stores an individual subscriber identity IMSI, however only a non-individual network authentication key K, which may be the same for several SIMs. In a personalization step, an individual network authentication key K is transferred to the SIM with the individual subscriber identity IMSI, and the non-individual network authentication key K is replaced with an individual network authentication key K. Due to controlled sending of the individual network authentication key K only to the SIM with the specified individual subscriber identity IMSI, unauthorized cloning of parameter data sets and distributing the cloned parameter data sets to a larger number of SIMs than allowed may be prevented.

### Objective of the invention

It is an object of the present invention to provide a secure method for in-factory profile provisioning which allows late binding of a specific profile to a specific eUICC, particularly as late as upon receipt, at the IFPP profile download facility, of a request to download a profile to an eUICC.

### Summary of the invention

The object of the invention is achieved by a method with following features, according to claim 1. Embodiments of the invention are presented in dependent claims.

In greater detail, the object of the invention is achieved by a method for establishing, in a target eUICC, profile data of at least one profile, the profile data including at least a subscriber identity (IMSI; SUPI; NAI) and an authentication key K. The method characterized by the step: a) generate, in the target eUICC, at least some of the profile data, herein at least a network authentication key K.

Whereas the binding solutions of the prior art rely on securing the Bound Profile Package BPP with a footprint of the target eUICC, or on transferring eUICC unique profile data from a profile server to the eUICC, the present invention proposes to generate at least some of the profile data, herein at least the network authentication key K, on-board in the eUICC.

The inventive solution has the following advantages:
a) Late binding is enabled, removing the necessity to assign a profile to a target eUICC in advance, at an early stage.
b) Due to the just-in-time individualization achieved by the network authentication key K generated in the target eUICC, distribution of clones into the field is prevented;
c) due to generation of the network authentication key K within the eUICC, leakage of the network authentication key K to entities seeking to produce clones is prevented, which contributes to that the presented solution is a secure method.

Accordingly, the present invention provides a secure method for in-factory profile provisioning which allows late binding of a specific profile to a specific eUICC, here referred to as target eUICC, particularly as late as upon receipt, at the IFPP profile download facility, of a request to download a profile to an eUICC.

According to some embodiments, the network authentication key K generated in step a) is specific or/and unique to the target eUICC. As set out, the network authentication key K is part of the profile data of a profile. Thus, the step of generating the network authentication key inside the eUICC effects a binding of the profile to one specific eUICC.

According to some embodiments, before step a) is executed, the target eUICC lacks a network authentication key K specific or unique to the target eUICC.

According to some embodiments, before step a) is executed, the target eUICC contains pre-installed profile data except profile data the form of a network authentication key K specific or unique to the target eUICC.

According to some embodiments, the method further comprises the step:
b) before step a), receive at the eUICC a profile package including profile data, the profile data including at least a subscriber identity (IMSI; SUPI; NAI), and install the profile data receive in step b) in the target eUICC.

Preferably, the profile package received in step b) lacks a network authentication key K specific or unique to the target eUICC.

The profile data received in step b) can be installed in the eUICC essentially as described in the prior art, particularly in the GSMA SGP.22 specification [1], whereas the network authentication key K is generated on-board within the eUICC.

According to some embodiments including step b), receive at the eUICC a profile package including profile data, the profile package is embodied as a Batch Bound Profile Package, being constructed as a Bound Profile Package encrypted with a batch profile protection key which is derived from a batch eUICC PKI key pair which is identical for all eUICCs of the batch, particularly derived according to a SGP.22 key agreement mechanism for generating a Bound Profile Package, with the batch eUICC one-time key pair used as the eUICC one-time key of SGP.22, wherein the method comprises the further step:
- after step b), unwrap the Batch Bound Profile Package so as to retrieve the profile data received in step b).

According to some embodiments including step b), receive at the eUICC a profile package including profile data, step a) to generate the network authentication key K in the eUICC is executed triggered by step b) receipt of the profile package.

In other words, according to one preferred embodiment, when the eUICC receives a profile package wherein the profile data lack a network authentication key K, for example a Batch Bound Profile Package BBPP of that kind, then receipt of said profile package triggers generation of the network authentication key K on-board within the eUICC, and as far as the profile package contains further profile data, installation of said further profile data in the eUICC.

According to some embodiments, the profile data generated in step a) in the target eUICC further comprise one or several of the following:
- OTA keys;
- Secure Channel keys;
- symmetric keys, particularly such for any purpose;
- asymmetric key pairs, particularly such for any purpose.

According to some embodiments, the profile package is received in step b) from an IFPP production machine located in an IFPP production environment and hosting the target eUICC.

According to some embodiments, the profile data generated in step a) in the target eUICC are embodied as or include one or several of the following:
- one or several random numbers;
- derived profile data derived from one or several random numbers, denoted master key(s). These master key(s) may or may not be part of the profile data themselves.

According to some embodiments, the network authentication key K generated in step a) in the target eUICC is generated by a key generation procedure comprising one or several of the following steps:
- establish the network authentication key K as a random number generated in the target eUICC;
- establish the network authentication key K as a function of a random number generated in the target eUICC and further key derivation data;
- provide the generated network authentication key K as a master key for the derivation of further keys which are specific or/and unique for the target eUICC, wherein the further keys comprise one or several of: OTA keys; Secure Channel keys; any other symmetric or asymmetric key;
- provide the generated network authentication key K as a key derived from a master key, also used for the derivation of further keys which are specific or/and unique for the target eUICC, wherein the further keys comprise one or several of: OTA keys; Secure Channel keys; any other symmetric or asymmetric key.

According to some embodiments, the method further comprises the step:
c) after step a) export the profile data generated in the target eUICC, or at least part thereof, or/and data from which the network authentication key K is derived, from the target eUICC to an external entity, wherein the external entity is or comprises one or several of the following:
- an IFPP production machine hosting the target eUICC, wherein step c) is performed in the IFPP production environment; wherein, subsequently, the data may be forwarded to another entity like an SM-DPf;
- an SM-DPf server located outside the IFPP production environment, wherein step c) is performed outside the IFPP production environment;
- an Operator server or EUM outside the IFPP production environment, wherein step c) is performed outside the IFPP production environment.

According to some embodiments, the profile data, or part thereof, exported from the target eUICC in step c) are exported in an encrypted form, encrypted with an export key.

According to some embodiments, the export key is embodied as one or several keys fulfilling one or several of the following features:
- an export key generated in the target eUICC;
- in the case where a Batch Bound Profile Package was received at the target eUICC, the same key with which the Batch Bound Profile Package was encrypted;
- random keys PPK-ENC and PPK-MAC according to SGP.22;
- session keys S-ENC and S-MAC according to SGP.22;
- an export key derived from one-time keys newly generated on the eUICC for each export or/and other keys included in the Batch Bound Profile Package.

According to some embodiments, the method further comprises, for at least some of the generated or/and received profile data, set or keep said at least part of the profile data in a blocked or disabled state, in which blocked or disabled state said profile data are not operable, and release or enable said blocked or disabled profile data upon occurrence of a specified event. Herein, the specified event may be one of the following: - authentication of the eUICC in a mobile network with the generated authentication key K; - successful authentication of the eUICC in a mobile network with the generated authentication key K; - verification of the generated profile data by an external entity, which may be or include any or several of: the IFPP production machine; the SM-DPf; the EUM.

After generation of the profile data in the eUICC, particularly the network authentication key K, and receipt and installation of other profile data in the eUICC, it might be wanted to have the eUICC not immediately fully operable. Keeping some profile data blocked or disabled, or setting them into a blocked or disabled state, allows to keep the eUICC in a secure idle state, before setting all profile data, and functionalities provided by said profile data, into fully enabled operational state.

According to some embodiments, (successful) authentication of the eUICC in a mobile network with the generated authentication key K is required before blocked profile data are unblocked. In case the same subscriber identity (IMSI; SUPI; NAI), and possibly further profile data, were present in one or several further eUICCs, then also in the further eUICCs, the same blocked profile data are blocked. As soon as the eUICCs with the authentication key K which is registered in the HLR successful authenticates in a mobile network, this enables unblocking of the blocked profile data / elements. Whenever a further eUICC seeks authentication with an authentication key K, that due to the randomized generation mechanism is different that the authentication key K registered in the HLR, in the mobile network, the mobile network rejects the authentication request, and the blocked profile data of the further eUICC(s) remain blocked.

### Brief description of the drawings

Embodiments of the invention will now be described with reference to the accompanying drawings, throughout which like parts are referred to by like references, and in which represents:
- Fig. 1: an IFPP Functional Architecture for Consumer and loT Devices, as depicted in Figure 1 of [2] [SGP.41];
- Fig. 2: a chart depicting entities internal and external to an IFPP production environment, in activity in connection with early binding a profile and provisioning such a profile to an eUICC;
- Fig. 3: the IFPP procedure as depicted in Fig. 6 of [2] [SGP.41];
- Fig. 4: an IFPP Functional Architecture for Consumer and loT Devices, as depicted in Figure 1 of [2] SGP.41, suitable for implementation of the present invention;
- Fig. 5: a modified IFPP procedure, based on the IFPP procedure as depicted in Figure 6 of [2] [SGP.41] (modified Fig. 3), including in step [10], data generation, according to an embodiment of the present invention.

### Detailed description of the invention

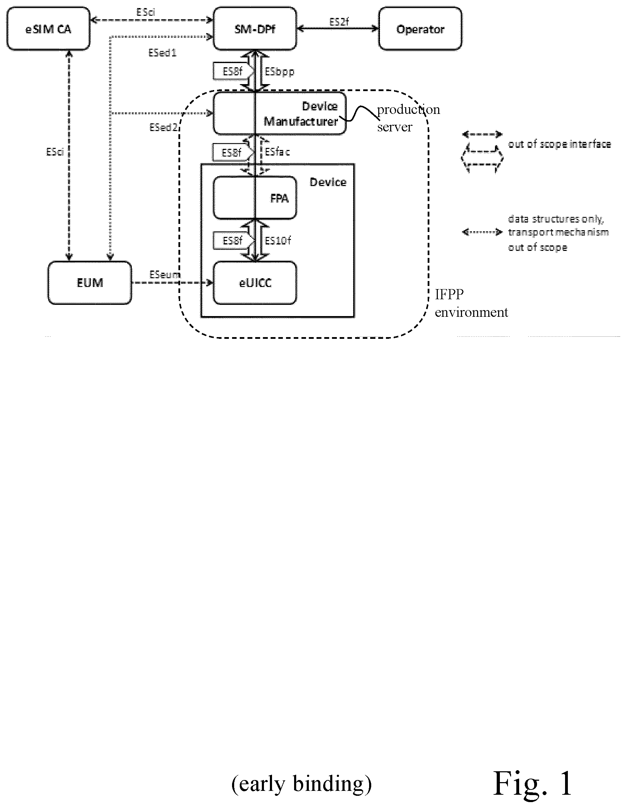

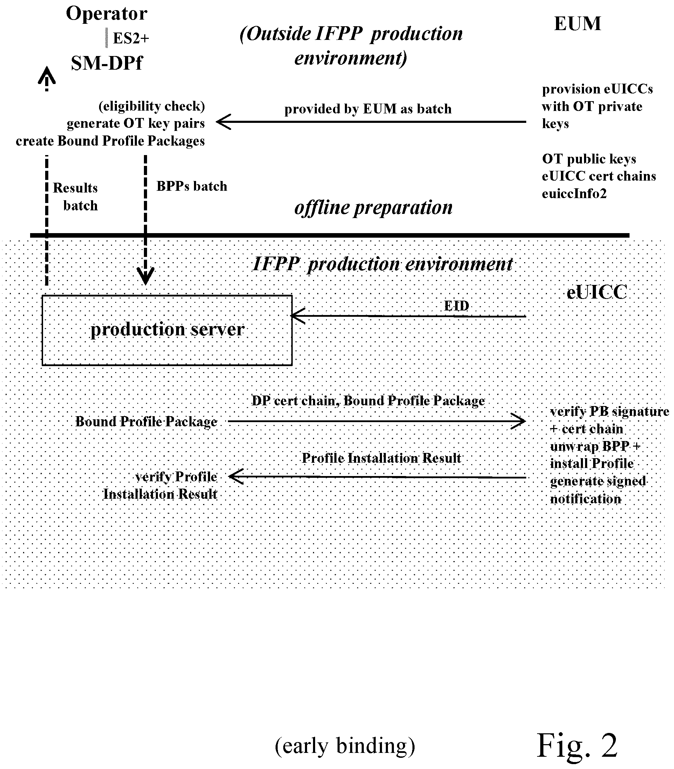

Fig. 1 shows an IFPP Functional Architecture for Consumer and loT Devices, as depicted in Figure 1 of [2] [SGP.41]. For profile download in an IFPP environment, a device manufacturer production server and the eUICC are located in the closed IFPP environment, which is a secured closed production environment. In Fig. 1, the limits of the IFPP environment (closed environment) are shown by a dashed line. The eUICC may be hosted in its target device, as shown in Fig. 2, or in an eUICC reader of the device manufacturer production server (the latter variant not being shown in Fig. 1). Other entities like SM-DPf profile sever, Operator (MNO server) and EUM are located outside the IFPP environment. Dashed lines from entities outside the IFPP environment, like EUM or SM-DPf, to the eUICC or device manufacturer production server depict data transfer at a status when the IFFP environment is not closed, however opened with online connections to external entities, wherein in the opened status no profile download is executed.

Fig. 2 shows a chart depicting entities internal and external to an IFPP production environment, in activity in connection with early binding a profile and provisioning such a profile to an eUICC. External entities SM-DPf, Operator (MNO) and EUM located outside the IFPP production environment. Internal entities production server and eUICC are located with the IFPP production environment. Outside the IFPP (production) environment, a Bound Profile Package BPP is prepared. For this, the EUM provisions a batch of several eUICCs with OT one-time private keys, and provides the OT (one-time) public keys and a certificate, namely the eUICC cert chains eUICCInfo2. The batch of eUICCs are provided to the device manufacturer. The corresponding OT public keys and certificates are provided to the SM-DPf profile server. At the SM-DPf or a data generation associated to the SM-DPf, profiles are provided and, with the OT public keys from the eUICC, packaged into Bound Profile Package BPP, to hereby create a batch of Bound Profile Packages BPPs. Due to the act of BPP generation with the OT public key of an eUICC, said BPP is already bound to a specific eUICC. The batch of eUICCs and the batch of Bound Profile Packages BPPs are transferred to the production server inside the IFPP production environment. For downloading a profile from the production server to an eUICC, the eUICC sends its EID to the production server. In reply, the production server sends a Bound Profile Package BPP containing a profile to the eUICC, as well as the DP certificate chain. The eUICC verifies the PB signature and the certificate chain, unwraps the Bound Profile Package and installs the Profile in the eUICC. Further, the eUICC generates a signed notification about the profile installation result and sends the notification to the production server that forwards it to the SM-DPf. The SM-DPf verifies the profile installation result notification.

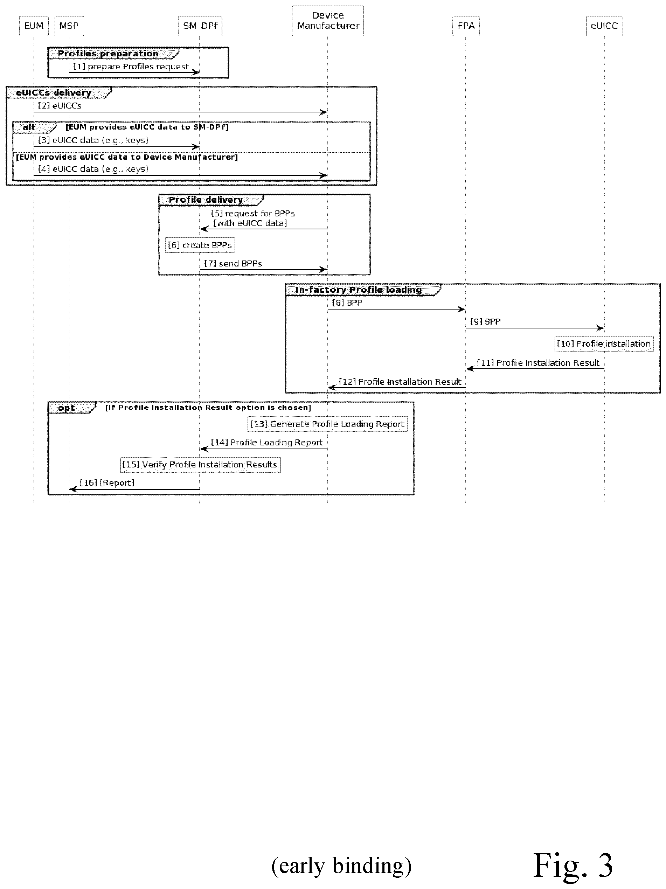

Fig. 3 shows the IFPP procedure as depicted in Fig. 6 of [2] [SGP.41]. The sub-procedure profiles preparation comprises following. Step [1]: the MSP sends to the SM-DPf a prepare Profile request. The sub-procedure eUICC delivery comprises following. Step [2]: eUICCs are delivered from the EUM to the device manufacturer at the location of which the IFPP production environment is installed and can be operated. Step [3]: The EUM provides eUICC data, particularly OT public keys, to the SM-DPf. Step [4]: The EUM provides eUICC data, particularly OT public keys, to the device manufacturer. The sub-procedure profile delivery comprises following. Step [5] the device manufacturer requests from the SM-DPf Bound Profile Packages, BPPs, herein indicating the eUICC data. Step [6]: The SM-DPf creates Bound Profile Packages, BPPs. Step [7]: the SM-DPf sends the created Bound Profile Packages, BPPs, to the device manufacturer. The sub-procedure In-factory profile loading comprises following. Step [8]: the device manufacturer production server loads a Bound Profile Package, BPP, to a Factory Profile Assistant FPA (similar to an LPA as in SGP.22) connected to an eUICC. Step [9]: the FPA sends the Profile Package, BPP, to the eUICC. Step [10]: the eUICC unwraps the Bound Profile Package, BPP, extracts the profile and installs the profile into the eUICC. Step [11]. The eUICC sends to the FPA a Profile Installation Result notification. Step [12]: the FPA forwards the Profile Installation Result notification to the device manufacturer production server.

The SM-DPf and/or the MSP and/or the EUM can be provided with a Report about a Result of the Profile Loading and Installation. The corresponding optional sub-procedure Profile Installation Result comprises following. Step [13]: the device manufacturer production server generates a Profile Loading and/or Installation Report. Step [14]: the device manufacturer sends the Profile Loading and/or Installation Report to the SM-DPf, which receives said report. Step [15]: based on the Profile Loading and/or Installation Report, the SM-DPf, verifies the Profile Installation Result. Step [16]: The SM-DPf sends to the MSP or/and EUM a Report about the Profile Installation Result.

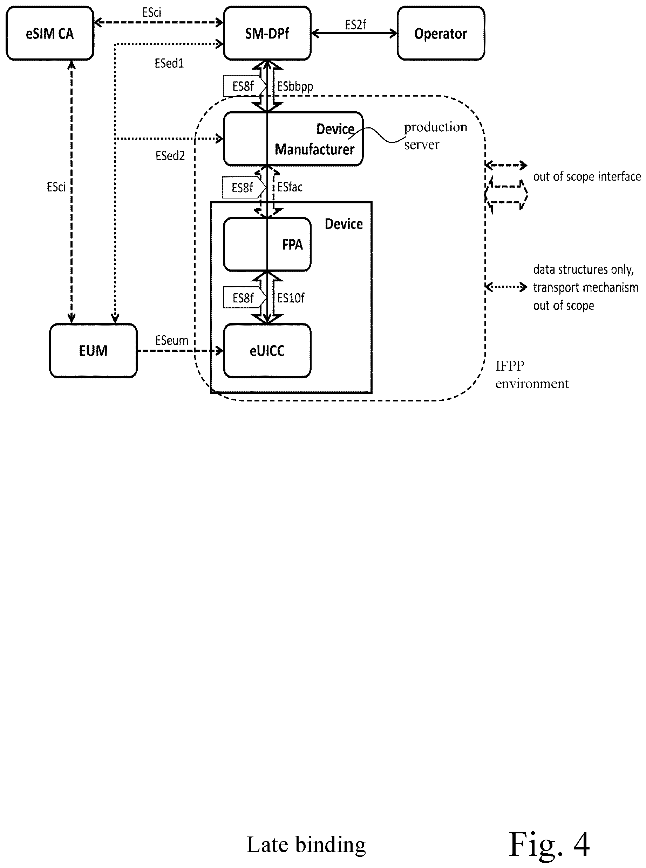

Fig. 4 shows an IFPP Functional Architecture for Consumer and loT Devices, as depicted in Figure 1 of [2] SGP.41, suitable for implementation of the present invention. The Functional Architecture of Fig. 4 is in some parts similar to that of Fig. 1. The difference is that the SM-DPf produces and delivers BBPPs instead of BPPs and has to recover the data generated on the eUICC.

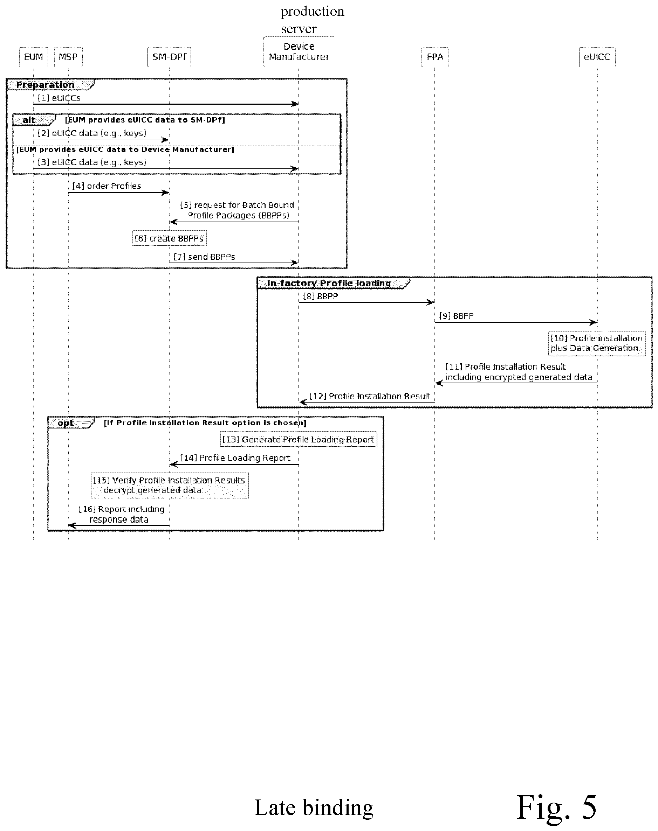

Fig. 5 shows a modified IFPP procedure, based on the IFPP procedure as depicted in Figure 6 of [2] [SGP.41] (modified Fig. 3), including in step [10], data generation, according to an embodiment of the present invention. Steps [1] to [5] are executed partly similar to steps [1] to [5] described referring to Fig. 3, with some deviations. Deviating from the procedure according to Fig. 3, in the procedure according to Fig. 5, in steps [2], [3], [5] and [6], instead of Bound Profile Packages, Batch Bound Profile Packages are created. For creating the Batch Bound Profile Packages, BBPPs, for a batch of profiles, profile protection keys are used which are not specific for a single eUICC, however which are specific only for the batch, and universal and identical for the batch of several eUICCs. By this, the creation of the Batch Bound Profile Packages BBPPs ensures that no non-authorized third party can unwrap the Batch Bound Profile Packages BBPPs, and at the same time ensures that each Batch Bound Profile Package is suitable for each eUICC from the batch of eUICCs. Also deviating from the procedure of Fig. 3, in the procedure in Fig. 5, in step [2] and step [3], the eUICC data lack a network authentication key K specific to an eUICC. In steps [8], [9], the BBPP instead of the BPP is downloaded to the eUICC. In step [10], the BBPP is unwrapped, and in addition, according to the present invention, the eUICC internally generates at the network authentication key K which is specific to the eUICC. The eUICC may internally generate further profile data. The basic procedure of steps [11] - [16] is as described with reference to Fig. 3. In addition, in step [11], within the Profile Installation Result notification or attached to the Profile Installation Result notification, the encrypted network authentication key K generated in the eUICC, and if applicable the encrypted further profile data generated in the eUICC, are sent from the eUICC to the FPA. In step [12], the FPA forwards also the additional data (network authentication key K, and if applicable further profile data, generated in the eUICC) received from the eUICC. In step [13], the productions server includes in its Profile Loading and/or Installation Report also the additional data (network authentication key K, and if applicable further profile data, generated in the eUICC). In step [14], also the additional data (network authentication key K, and if applicable further profile data, generated in the eUICC) are sent form the device manufacturer to the SM-DPf. In step [15], the SM-DPf, in addition, decrypts the network authentication key K generated in the eUICC, and if applicable further profile data generated in the eUICC. In step [16], the SM-DPf, in addition, sends the network authentication key K generated in the eUICC, and if applicable further profile data generated in the eUICC to the MSP. The SM-DPf ensures Anti cloning as it could identify double produced BBPPs and react accordingly.

### Cited documents

[1] [SGP.22] GSMA SGP.22 RSP Technical Specification Version 3.0, 19th October 2022
[2] [SGP.41] GSMA SGP.41 eSIM IFPP Architecture and Requirements Version 1.0 Draft 17
[3] [SGP.42] GSMA SGP.42 eSIM IFPP Technical Specification (to be finalized and unpublished at the date of filing the application)
[4] EP2283666B1
[5] EP3669562B1

## Claims

1. A method for establishing, in a target eUICC, profile data of at least one profile, the profile data including at least a subscriber identity (IMSI; SUPI; NAI) and an authentication key K, the method **characterized by** the step:
a) generate, in the target eUICC, at least some of the profile data, herein at least a network authentication key K.

2. The method according to claim 1, wherein the network authentication key K generated in step a) is specific or/and unique to the target eUICC.

3. The method according to claim 1 or 2, wherein, before step a) is executed:
- the target eUICC lacks a network authentication key K specific or unique to the target eUICC; or/and
- the target eUICC contains pre-installed profile data except profile data the form of a network authentication key K specific or unique to the target eUICC.

4. The method according to any of claims 1 to 3, further comprising the step:
b) before step a), receive at the eUICC a profile package including profile data, the profile data including at least a subscriber identity (IMSI; SUPI; NAI), and install the profile data receive in step b) in the target eUICC.

5. The method according to claim 4, wherein the profile package lacks a network authentication key K specific or unique to the target eUICC.

6. The method according to claim 4 or 5, wherein the profile package is embodied as a Batch Bound Profile Package, being constructed as a Bound Profile Package encrypted with a batch profile protection key which is derived from a batch eUICC key pair which is identical for all eUICCs of the batch, particularly derived according to a SGP.22 key agreement mechanism for generating a Bound Profile Package, with the batch eUICC key pair used as the eUICC one-time key of SGP.22, wherein the method comprises the further step:
- after step b), unwrap the Batch Bound Profile Package so as to retrieve the profile data received in step b).

7. The method according to any of claims 4 to 6, wherein step a) is executed triggered by step b).

8. The method according to any of claims 1 to 7, wherein the profile data generated in step a) in the target eUICC further comprise one or several of the following:
- OTA keys;
- Secure Channel keys;
- symmetric keys, particularly such for any purpose;
- asymmetric key pairs, particularly such for any purpose.

9. The method according to any of claims 1 to 8 and claim 4, wherein the profile package is received in step b) from an IFPP production machine located in an IFPP production environment and hosting the target eUICC.

10. The method according to any of claims 1 to 9, wherein the profile data generated in step a) in the target eUICC are embodied as or include one or several of the following:
- one or several random numbers;
- derived profile data derived from one or several random numbers, denoted master key(s). These master key(s) may or may not be part of the profile data themselves.

11. The method according to any of claims 1 to 10, wherein the network authentication key K generated in step a) in the target eUICC is generated by a key generation procedure comprising one or several of the following steps:
- establish the network authentication key K as a random number generated in the target eUICC;
- establish the network authentication key K as a function of a random number generated in the target eUICC and further key derivation data;
- provide the generated network authentication key K as a master key for the derivation of further keys which are specific or/and unique for the target eUICC, wherein the further keys comprise one or several of: OTA keys; Secure Channel keys; any other symmetric or asymmetric key;
- provide the generated network authentication key K as a key derived from a master key, also used for the derivation of further keys which are specific or/and unique for the target eUICC, wherein the further keys comprise one or several of: OTA keys; Secure Channel keys; any other symmetric or asymmetric key.

12. The method according to any of claims 1 to 11, further comprising the step:
c) after step a) export the profile data generated in the target eUICC, or at least part thereof, or/and data from which the network authentication key K is derived, from the target eUICC to an external entity, wherein the external entity is or comprises one or several of the following:
- an IFPP production machine hosting the target eUICC, wherein step c) is performed in the IFPP production environment; wherein, subsequently, the data may be forwarded to another entity like an SM-DPf;
- an SM-DPf server located outside the IFPP production environment, wherein step c) is performed outside the IFPP production environment;
- an Operator server or EUM outside the IFPP production environment, wherein step c) is performed outside the IFPP production environment.

13. The method according to claim 12, wherein the profile data, or part thereof, exported from the target eUICC in step c) are exported in an encrypted form, encrypted with an export key.

14. The method according to claim 13, wherein the export key is embodied as one or several keys fulfilling one or several of the following features:
- an export key generated in the target eUICC;
- in the case where a Batch Bound Profile Package was received at the target eUICC, the same key with which the Batch Bound Profile Package was encrypted;
- random keys PPK-ENC and PPK-MAC according to SGP.22;
- session keys S-ENC and S-MAC according to SGP.22;
- an export key derived from one-time keys generated on the eUICC new for each export or/and other keys included in the Batch Bound Profile Package.

15. The method according to any of claims 1 to 14, further comprising, for at least some of the generated or/and received profile data, set or keep said at least part of the profile data in a blocked or disabled state, in which blocked or disabled state said profile data are not operable, and release or enable said blocked or disabled profile data upon occurrence of a specified event, wherein the specified event may be one of the following:
- authentication of the eUICC in a mobile network with the generated authentication key K;
- successful authentication of the eUICC in a mobile network with the generated authentication key K;
- verification of the generated profile data by an external entity, which may be or include any or several of: the IFPP production machine; the SM-DPf; the EUM.
